(19) Europäisches Patentamt

European Patent Office

Office européen des brevets

(11) **EP 1 010 475 A1**

(12) **EUROPEAN PATENT APPLICATION**

(43) Date of publication:
21.06.2000 Bulletin 2000/25

(51) Int. Cl.[7]: **B09C 1/00**, B09C 1/08, G21F 9/30, C09K 17/02

(21) Application number: 98204250.9

(22) Date of filing: 15.12.1998

(84) Designated Contracting States:
**AT BE CH CY DE DK ES FI FR GB GR IE IT LI LU MC NL PT SE**
Designated Extension States:
**AL LT LV MK RO SI**

(71) Applicants:
• **SCK.CEN**
  **1160 Brussels (BE)**
• **K.U. Leuven Research & Development**
  **3000 Leuven (BE)**

(72) Inventors:
• **Cermers, Adrien**
  **9900 Beklo (BE)**
• **Vandenhove, Hildegarde**
  **2490 Balen (BE)**
• **Smolders, Erik**
  **3001 Heverlee (BE)**

(74) Representative:
**Bird, William Edward et al**
**Bird Goen & Co.,**
**Vilvoordsebaan 92**
**3020 Winksele (BE)**

(54) **Methods and compositions for the fixation of trace amounts of radiocaesium**

(57) The contamination of parts of the food chain such as soils, water supplies and animal fodder with radiocaesium has long been a topic of concern. Methods of fixing radiocaesium are described which include the use of a 2-1 layer phyllosilicate which is at least partly exchanged with potassium, caesium, rubidium or ammonium. The partly exchanged 2-1 layer phyllosilicate may be contacted with soil and then the mixture subjected to a series of wetting and drying cycles. The transfer factor of radiocaesium to growing plants is significantly reduced by the application of the partly exchanged 2-1 layer phyllosilicate to soils independent of whether the soils have a low cation exchange capacity (e.g. podzolic or sandy soils) or include a higher loading of organic material.

. Methods of soil and water supply treatment are described. The compositions and methods of the present invention may provide an unexpectedly high and industrially useful radiocaesium sorption selectivity

Fig. 3

## Description

The present invention relates to methods and compositions for the control and/or reduction, e.g. fixation, of trace quantities of radioactive caesium in living beings such as plants, animals or humans or in agricultural substances such as soil, or in foodstuffs or in water supplies. The present invention relates to a composition which is particularly suitable for use as a soil additive, as well as to methods for decontaminating soil, water supplies or any other part of the natural food chain including intermediate and final food products. The methods and compositions of the present invention may also be useful in prophylactic application for avoiding the contamination of living beings with radioactive caesium by control of the uptake of radiocaesium in plants, animals or humans or by fixation of radiocaesium in agricultural substances such as soil, or foodstuffs or water supplies. The compositions according to the present invention may find use in herbicides, fungicides, pesticides, fertilisers, pH stabilisers and other agricultural substances for application to plants and soils.

## TECHNICAL BACKGROUND

There has long been a requirement for decontamination of soil, and other elements of the food chain, including plants, animals, and intermediate and final food products of both animals and humans which have become contaminated with radioactive caesium. Radioactive caesium may be released into the atmosphere during nuclear tests, nuclear wars or accidents at nuclear power stations. Due to the volatility of caesium it may be released into the atmosphere and transmitted by clouds and wind over long distances and deposited over wide areas in trace quantities by precipitation and rain. The danger exists that this radioactive caesium can be included into the food chain, e.g. through the plants growing on contaminated soil, and/or animals being fed with or grazing on contaminated plants, and may lead to consumption by animals or humans in foodstuffs. The radioactive caesium may become concentrated in certain animals or in humans or in other parts of the food chain and may result in long term harmful effects, particularly as the half life of radioactive caesium is of the order of 30 years. Radioactive caesium deposited upon the soil over large areas may seep down to natural water supplies and may result in contaminated metropolitan water supplies which may effect large populations over long periods of time.

During the accident at the Chernobyl power plant in 1986, $2 \times 10^{18}$ Bq of radioactive material was released, the majority of which was deposited on Europe. Amongst the fission isotopes, $^{134}$Cs, $^{137}$Cs and the strontium isotopes were considered to be the most harmful. In the aftermath of the Chernobyl disaster, a great deal of effort has been invested in the search for agricultural countermeasures that reduce the transfer of radiocaesium from soil to crops or animal fodder. The primary purpose of these endeavours is to prevent, as much as possible, the entry of radiocaesium into the food chain, thus limiting the radiation dose which results from food intake. The mobility of radionuclides released into the environment along the food chains is closely related to the biogeochemical conditions in the contaminated zone. Where the fall out is deposited on sandy or peaty soils with low content of clay minerals, soil to plant transfer may be relatively high (4 to 5 times higher compared with that on brown earths and clay soils) and remain so for many years.

In the experimental collaboration project number 2 of the European Commission, Belarus, the Russian Federation and the Ukraine, entitled "The transfer of radionuclides through the terrestrial environment to agricultural products, including the evaluation of agrochemical practices", various compositions were examined as soil additives in an attempt to treat soils contaminated with radioactive caesium. The results of this experiment have been published in the final report, EUR 16528 (1996). The various countermeasures which were tested in the territories contaminated by the Chernobyl emission have been rather disappointing and no cures have been developed which show a lasting and significant effect. The general idea underlying conventional countermeasure strategies against radioactive caesium contamination of soil may be summarised as: (a) increasing the soil sorption potential and thus lowering the activity of radiocaesium in the soil solution bathing the plant root (soil chemical) and (b) increasing the soil solution level of cations - potassium in this case - which are competitive with caesium in the root uptake process (plant physiological). Both kinds of strategies have failed in the recent EU multi-national project mentioned above. K fertilisation, although known for its competitive effect in radiocaesium uptake, did not lead to any significant improvement. The strategies based on the use of soil additives of high CEC, such as Ca-bentonite, sapropell and zeolites, failed as well.

The above collaboration experiment was directed towards investigations of the soil, the measurement of soil to plant transfer, and the reduction of both systemic and surface contamination of crops. The application of extra quantities of potassium fertilisers, especially in poorly fertilised soils, led to some decrease in root up take of radioactive caesium but the field results were not as positive as laboratory predictions. Application of sapropell, bentonite or clinoptilolite did not show any clear effects. The application of ammonium-ferro-cyano-ferrate (sometimes known as Prussian Blue) which had shown promising results in laboratory tests, gave field results which were not significant.

It has been argued that the solid/liquid partitioning of radiocaesium in soils and sediments - and thus the soil-chemical availability - is governed by (a) the Radiocaesium Interception Potential (RIP), defined as the product of the FES capacity [Frayed Edge Sites which are associated with the micaceous clays (illite) in the soil (Cremers, A., Elsen, A., De Preter, P. & Maes, A. Quantitative analysis of radiocaesium retention in soils. *Nature* **335,** 247-249 (1988).)] and the trace Cs to K selectivity coefficient in the FES and (b) the composition of the liquid phase, e.g. the K and $NH_4$ concentration (Sweeck, L., Wauters, J., Valcke, E. & Cremers, A. The specific interception potential of soils for radiocaesium. In *Transfer of Radionuclides in Natural and Semi-Natural Environments* (eds Desmet, G., Nassimbeni, P. & Belli M.), Elsevier, Barking, UK, pp. 249-258 (1990), Cremers, A. *et al* In *Transfer of Radionuclides in Natural and Semi-Natural Environments* (eds Desmet, G., Nassimbeni, P. & Belli M.), Elsevier, Barking, UK, pp. 243-248 (1990), Comans, R.N.J., Middelburg, J.J. Zonderhuis, J., Woittiez, J.R.W., De Lange, G.J., Das, H.A. & Van der Weijden, C.H. Mobilisation of radiocaesium in pore water of lake sediments. *Nature* **339,** 367-369 (1989), Wauters, J., Elsen, A., Cremers, A., Konoplev, A.V., Bulgakov, A.A. & Comans, R.N.J. Prediction of solid/liquid distribution coefficients of radiocaesium in soils and sediments, Part one: A simplified procedure for solid phase characterisation. *J. Appl. Geochem*. 1996, **11,** 589-594). It has also been argued that, for the very large majority of soils and sediments even with high organic matter content, radiocaesium is quantitatively - or very nearly so - intercepted in the FES (Wauters, J., Madruga, M. J., Vidal, M., & Cremers, A. Solid phase speciation of radiocaesium in freshwater sediments. *Sci. Total Environ*. **197,** 121-130 (1996); Wauters, J. Vidal, M., Elsen, H. & Cremers, A. Prediction of solid/liquid distribution coefficients of radiocaesium in soils and sediments. Part two: A new procedure for solid phase speciation of radiocaesium. *J. Appl. Geochem*. **11,** 595-599 (1996)). A routine methodology has now been developed for measuring RIPs and $K_D$ values can be reasonably well predicted on the basis of RIP and the K and $NH_4$ concentrations in the soil solution (Wauters, J., Elsen, A. & Cremers, A. Prediction of solid/liquid distribution coefficients of radiocaesium in soils and sediments. Part three: A quantitative test of a $K_D$ predictive equation. *J. Appl. Geochem*. **11,** 601-603 (1996)). Environmental samples show several common characteristics with regard to radiocaesium sorption: the trace Cs to K selectivity coefficient in the FES is generally in the range of 500 to 1000; the $NH_4$ ion is about 5 times more sorption-competitive in the FES than K and the FES capacity represents generally about 2 to 4 % of the overall cation exchange capacity (CEC) except in organic soils (De Preter, P., Van Loon, L., Maes, A. & Cremers, A. Solid/liquid distribution of radiocaesium in Boom clay. A quantitative interpretation. *Radiochem*. *Acta* **52/53,** 299-302 (1991) and other citations above). RIP values of environmental samples cover a range of nearly three orders of magnitude varying between 1 $cmol_c$ $kg^{-1}$ for organic soils, 10 $cmol_c$ $kg^{-1}$ for podzolic soils and very sandy sediments and 500 $cmol_c$ $kg^{-1}$ for heavy clay soils, chernozems and fine-textured sediments. The upper limit is found for the illite clay mineral (1200 $cmol_c$ $kg^{-1}$). Some zeolites such as mordenite and clinoptilolite show RIP values as high as 3000-6000 $cmol_c$ $kg^{-1}$ (Valcke, E., Engels, B. & Cremers, A. The use of zeolites as amendments in radiocaesium- and radiostrontium-contaminated soils: A soil-chemical approach. Part I: Cs-K exchange in clinoptilolite and mordenite. *Zeolites* **18,** 205-211 (1997)).

The subject of K fixation and the effect of drying cycles is a very old one in soil chemical literature. More than 50 years ago it was demonstrated that drying (at 100°C) of homoionic K-bentonite leads to fixation levels of up to 50 % and that such an effect is enhanced by repeated treatments (Page, J.B. & Bover, L.D., *Soil Sci. Am. Proc*. **4,** 150-155 (1939); Marschall, C.E. & McLean, C.E. *Soil Sci. Am. Proc*. **12**, 150-155 (1947)). It was furthermore shown that tetrahedral charge substitution leads to distinctly higher levels of K fixation (Wear, I.J. & White, J.L. *Soil Sci*. **71,** 1-7 (1951)). Some 20 years ago it was demonstrated that the turbostratic structure of montmorillonite disappears and a three dimensional mica-like mineral is created upon prolonged wetting and drying of K-montmorillonite (Gaultier, J.P. & Mamy, J. Etude des facteurs influencant l'évolution structurale de la montmorillonite K et sa reversibilité. *Clay Miner*. **13,** 139-146 (1978); Plançon, A., Besson, G.N., Gaultier, J.P., Mamy, J. & Tchoubar, C. Qualitative and quantitative study of a structural reorginization in montmorillonite after potassium fixation. *In Proc. Int. Clay Conf. Oxford, 1978* (Mortland, M.M. & Farmers V.C.), Elsevier, Amsterdam, pp 45-54 (1979)). The reorganisation into a collapsed, more ordered mica-like structure depends on the number of wetting-drying cycles. The formation of Cs-specific sorption sites after collapse of homoionic K-montmorillonite was demonstrated some 10 years ago (Maes, A., Vanderheyden, D. & Cremers, A. Formation of highly selective cesium-exchange sites in montmorillonites *Clays & Clay Minerals*, **33(3**), 251-257 (1985)). It was shown that specific sorption sites could be generated in K-montmorillonite as a result of wetting and drying (80°C) cycles and that the effect was promoted by increasing the number of cycles. These observations were limited to academic laboratory studies on homoionic K-clays and no industrial application was contemplated or suggested. Further, the thrust of these known analyses was directed towards the academic study of how illite could be formed naturally in soil by a process of smectite illitization. In the same time period examination of naturally occurring potassium bentonite beds with illite rich contacts and smectite rich interiors indicated how the process of smectite illitization could occur in nature as a product of potassium metasomatism of Ca- or Na-bentonite. Minerals suggested for the countermeasures against radiocaesium contamination have included illitic caesium adsorbents or sapropell (a sediment of high organic matter content).

It is proposed in RU 2013965 to introduce an adsorbent for caesium into animal food stuffs. The adsorbent contains a transition metal ferrocyanide and bentonite. In RU 2013913 a ferrocyanide bentonite adsorbent is proposed for the addition to contaminated soils to reduce the assimilation of radioactive caesium by plants. The adsorbent is added to the soil before ploughing or is spread during irrigation. RU 2007211 proposes to treat solutions or waste liquids with a transition ferrocyanide on the surface of a particulate aluminosilicate carrier such as bentonite.

DE 3704638 proposes the use of bentonite in the decontamination of radioactively contaminated food stuffs in which the food stuff is in liquid form or converted thereto and the bentonite is brought in contact therewith. It is also proposed to include bentonite in meals for humans or in tablet or powder form to be taken during nuclear emergencies.

The report entitled "Suitability of K+ bentonites for the removal of caesium and strontium ions", by Satya Brat and K. Balu, published by the Bhabha Atomic Research Centre, Bombay, India, 1972 proposes the use of homoionic potassium bentonite for the treatment of water supplies. The homoionic bentonite was produced by boiling naturally occurring Indian bentonite with potassium chloride solutions for up to forty days.

An object of the present invention is to remove radiocaesium from the food chain in an economical way.

Another object of the present invention is to provide a soil additive and soil treatment method which assists in preventing or reducing the uptake of radiocaesium in plants.

## SUMMARY OF THE INVENTION

One aspect of the present invention is a method of treating soil including the step of providing a caesium selective sorption capacity, the method including the steps of

1) contacting the soil with an at least partly potassium, ammonium, rubidium or caesium exchanged 2-1 layer phyllosilicate or 2-1 layer interstratified phyllosilicate;

2) subjecting the soil to wetting and drying cycles. The 2-1 layer phyllosilicate preferably has a collapsible structure, e.g. bentonite, the collapse being at least initiated by the partial or complete exchange with the monovalent ion. An initial step may be adding a mixture of a 2-1 layer phyllosilicate or 2-1 layer interstratified phyllosilicate and a potassium, an ammonium, a rubidium or a caesium salt to the soil. Alternatively, the initial step may be at least partial saturation of the 2-1 layer phyllosilicate with potassium, ammonium, rubidium, caesium ions in an aqueous solution before addition to the soil. Soil may be described as the loose material on the earth's surface in which plants grow. In accoradnce with the present invention soil includes all types of loose materials of the earth's surface in which plants grow, e.g. sandy soils, peaty soils, clay soils, loam soils. Soil generally includes a loose mixture of inorganic, e.g. mineral material and organic material as well as a liquid component based on water and a gas component which may include nitrogen, carbon dioxide, oxygen, methane or some hydrogen sulphide gas.

The present invention also includes a soil with a caesium selective sorption capacity provided by an at least partly potassium, ammonium, rubidium or caesium exchanged 2-1 layer phyllosilicate or 2-1 layer interstratified phyllosilicate additive.

The present invention also includes a soil additive, Aasoil additive, a herbicide, a pesticide, a pH stabiliser, a fertiliser, a fungicide or a treatment additive including a potassium, ammonium, rubidium or caesium containing substance in combination with a 2-1 layer phyllosilicate or 2-1 layer interstratified phyllosilicate.

Another aspect of the present invention is a method of treating soil including the step of providing a caesium selective sorption capacity, the method including the steps of: adding a 2-1 layer phyllosilicate or 2-1 layer interstratified phyllosilicate to the soil; and at least partially collapsing the structure of the 2-1 layer phyllosilicate or 2-1 layer interstratified phyllosilicate, the caesium selective sorption of the treated soil having a measured RIP value of at least 3000, preferably at least 5000 and most preferably above 6000 $cmol_c$ per kg weight of the phyllosilicate added. Preferably, at least a portion of the collapsing step is done in the soil (in-situ collapse). The collapsing step may include a plurality of cycles of drying and wetting with water. The cycles may be synthetic, i.e. heating and drying cycles using ovens (ex situ), or may be natural, i.e. as occurs due to the natural wetting and drying cycles induced by climatically induced wet and dry periods, or a mixture of synthetic and natural methods. The collapsing step may be preceded by at least a partial saturation of the phyllosilicate with monovalent ions in an aqueous solution, e.g. potassium and/or ammonium ions. Preferably, the phyllosilicate includes a smectite clay.

Another aspect of the present invention is a soil with a caesium selective sorption capability provided by the addition of a 2-1 layer phyllosilicate or 2-1 layer interstratified phyllosilicate, the 2-1 layer phyllosilicate having at least a partially collapsed structure in the soil, the soil having a measured RIP value of at least 3000 preferably at least 5000 and most preferably above 6000 $cmol_c$ per kg of phyllosilicate added. The phyllosilicate may be a natural or chemically induced homoionic phyllosilicate, e.g. a K- or $NH_4$-phyllosilicate or mixtures thereof Preferably, the phyllosilicate includes a smectite clay.

The present invention includes providing an ammonium or potassium or ammonium/potassium smectite clay and generating a sorption capability showing a high sorption selectivity for radiocaesium by subjecting mixtures of $NH_4$-, K- or $NH_4$/K-smectite clays and soil to cycles of wetting with water and drying. The compositions in accordance with the present invention may be applied directly to the soil or may be included in or with irrigation water.

Starting materials for the present invention may be described as 2-1 layer phyllosilicates which have a collapsible structure. In accordance with the present invention "collapsible" also includes the removal of interlayer molecules or atoms to collapse the layered structure of the phyllosilicate. In addition, the present invention includes the use of mixtures of monovalent and polyvalent ionic materials to induce collapse. Usually such 2-1 layer phyllosilicates exhibit pronounced swelling or expansion (e.g. in water, ethylene glycol or glycerol) which distinguishes these over the non-swelling 2-1 phyllosilicates such as pure illite, clay mica, hydrous mica, mica or the "10 Ångstrom materials". Starting materials for the present invention may be selected from dioctahedral or trioctahedral smectites (see "Chemistry of clays and clay minerals", ed. A. C. C. Newman, Longman Scientific & Technical, 1987). The starting material for the present invention may be naturally occurring or may be manufactured by subjecting a swellable 2-1 layer phyllosilicate such as a smectite clay to monovalent ions, e.g. potassium and/or ammonium ions in aqueous solution. Naturally occurring K-bentonite may be used as a starting material as found, for instance, at Kinnekulle in Sweden, in the Marias River formation, Montana, USA or at Arisaig, Nova Scotia, Canada. Further starting materials may be 2-1 layer interstratified phyllosilicates, such as interstratified smectites such as rectorite. The other species in the interstratification may be, for example, illite (e.g. interstratified smectite-illites), a chlorite, a mica, a talc, a kaolinite, or similar. Preferably, the smectite predominates in the interstratified clay. Naturally occurring potassium phyllosilicates may be used as extracted or may also be beneficiated by contact with potassium, ammonium, caesium or rubidium ions to guarantee a homoionic starting material in accordance with the present invention.

The present invention also includes compositions and methods for the treatment of uncultivated fields, e.g. meadows, after contamination with radiocaesium either by the use of $NH_4$-, K- or $NH_4$/K-smectite clays as such or by the use of $NH_4$-, K- or $NH_4$/K-smectite clay/soil mixtures which have been previously subjected to drying and wetting cycles with water in accordance with the present invention (pre-cycled clays).

In particular, the present invention includes addition of potassium and/or ammonium bentonite to soil contaminated with radiocaesium. This leads, after natural or artificial wetting and drying cycles (rain/sun or irrigation/sun) to the in situ generation of a sorption capability showing a high sorption selectivity for radiocaesium. The caesium fixation performance per kg of material added is considerably better than illite.

The present invention also includes the use of $NH_4$-, K- or $NH_4$/K-smectite clays in accordance with the present invention in other agricultural compositions and treatment agnets such as fertilisers, pesticides, herbicides, fungicides, soil pH stabilisers as well as compositions of such clays comprising $NH_4$-, K- or $NH_4$/K-smectite clay. Preferably, any chemicals in the agricultural substances should ne chosen so as not to block the generation of the caesium specific absorption sites in the clays. Generally, provided the active molecules in the pesticides, fertilisers, herbicides, fungicides, soil pH stabilisers or similar are large enough they will be sorbed on different sites of the clays in accordance with the present invention rather than by any sites related to the caesium selectivity of the present invention.

The present invention also includes the prophylactic application to uncultivated or cultivated soils of the $NH_4$-, K- or $NH_4$/K-smectite clays according to the present invention in order to build up a radiocaesium selective sorption capability before a potential contamination with radiocaesium. Such prophylactic applications also include the use of $NH_4$-, K- or $NH_4$/K-smectite clay in accordance with the present invention in other agricultural compositions such as fertilisers, herbicides, fungicides, soil pH stabilisers or similar.

The compositions and methods of the present invention may provide an unexpectedly high and industrially useful radiocaesium sorption selectivity. Despite intensive study of the process of smectite illitization in all its aspects, at no time has it been suggested that addition of a collapsible 2-1 layer phyllosilicate to soil could generate a highly selective sorption capability for caesium which is better than that generated by illite in the soil. The novel compositions and methods of the present invention may remedy the situation in many soils contaminated with radioactive caesium. The compositions and methods of the present invention have been demonstrated by the effect of the K-status of a podzolic soil on radiocaesium availability. In accordance with one embodiment of the present invention a specific sorption capability is formed in-situ, following the application of potassium bentonite (K-bentonite), particularly homoionic K-bentonite to the soil. K-bentonite not only occurs in nature but can also be prepared from a readily available raw material, Na- or Ca-bentonite, and a water soluble potassium salt such as potassium carbonate. The RIP of the material generated in the soil in accordance with one embodiment of the present invention is at least 3000 cmol$_c$ kg$^{-1}$ and is preferably at least 6000 cmol$_c$ kg$^{-1}$, i.e. some two to three orders of magnitude higher than the one commonly found for podzolic soils. It exceeds the RIP value of illite by an unexpectedly large factor of up to seven. It is assumed that the sorption selectivity is generated by a pool of specific sorption sites in the soil related to the collapse of the 2-1 layer phyllosilicate but the present invention is not limited to this assumption. The trace Cs to K selectivity coefficient in the specific sites generated is about 7000, or one order of magnitude higher than found for environmental samples. In accordance with one embodiment of the present invention, a 1 % dose of K-bentonite based on per kg of soil or some 40 t ha$^{-1}$ may be added to the soil and may lead to a 5 to 10 fold increase in the soil RIP, resulting in a similar effect for the reduction of soil-plant radiocaesium transfer, i.e. a significant fixation of the radioactive caesium on the special sorption sites generated by use of the compositions and the methods in accordance with the present invention.

The present invention also includes compositions and methods for the treatment of water supplies contaminated with radiocaesium by the use of $NH_4$-, K- or $NH_4$/K-smectite clay/soil mixtures which have been previously subjected to drying and wetting cycles with water in accordance with the present invention (pre-cycled clays in accordance with the invention). In particular, the present invention includes the use of $NH_4$-, K- or $NH_4$/K-smectite clay/soil mixtures previously subjected to water wetting and drying cycles in accordance with the present invention as a radiocaesium filtration or backfill layer, e.g. at sites of nuclear power stations or depots of nuclear waste, to form a radiocaesium filter for ground and seepage water.

The present invention also includes compositions and methods for the manufacture of foodstuffs comprising $NH_4$-, K- or $NH_4$/K-smectite clay/soil mixtures which have been subjected to drying and wetting cycles with water in accordance with the present invention.

The dependent claims define individual embodiments of the present invention. The present invention will now be described with reference to the following figures.

## BRIEF DESCRIPTION OF THE FIGURES

Fig. 1 shows K-loss as a function of K-input (soil-K+bentonite-K+solution-K) and percentage bentonite added (series A) in tests carried out in accordance with a first embodiment of the present invention.

Fig. 2 shows the fit of $\overline{K}_C{}^{(Cs/K)}$ (series B) as a function of total exchangeable K based on a $K_C{}^{FES\ (Cs/K)}$ of 7000 and an [FES] range of 0.01 to 0.02 $cmol_c$ $kg^{-1}$ in tests carried out in accordance with the first embodiment of the present invention.

Fig. 3 shows soil-to-plant transfer factors (TF) for both the systems in accordance with the first embodiment of the present invention and the controls for all seven cuts of rye grass. The "all other" values represent the average TFs for all systems with >0.25 % K-bentonite addition (A1-A4 and B1-B6) whereby the error bars represent standard deviations.

## DESCRIPTION OF THE ILLUSTRATIVE EMBODIMENTS

The present invention will be described with respect to certain embodiments and figures but the invention is not limited thereto but only by the claims. In particular, the present invention will be described with reference to the use of K-bentonite and mixtures of a potassium salt and bentonite as a soil additive but the invention is not limited thereto and not only includes the use of ammonium and/or potassium bentonites but also ammonium and/or potassium smectites in general or any 2-1 layer phyllosilicate whose structure can be at least partially collapsed, e.g. by treatment with monovalent ions such as rubidium, caesium, potassium and/or ammonium ions in aqueous solution followed by cycles of drying and wetting with water, as well as application of powder mixtures of an at least partly collapsible 2-1 layer phyllosilicate with an ionic potassium, ammonium, caesium or rubidium compound. However, the present invention is not limited thereto and includes any method of collapsing the structure of the phyllosilicate. Further, in the following it is assumed that the collapse of the 2-1 layer phyllosilicate generates a pool of sites which provide the radiocaesium sorption selectivity as this is the most plausible explanation but the present invention is not limited to such a hypothesis nor to any mode of how the selectivity is generated except as defined in the attached claims.

One aspect of the present invention is based on the fact that radiocaesium sorption in soils, in contrast to radiostrontium sorption, is not at all governed by the ion exchange sites associated with the overall CEC. An aspect of the present invention is to generate a specific selective sorption capability for radiocaesium in the soil. In accordance with a first embodiment of the present invention this includes providing an $NH_4$-, K- or $NH_4$/K-smectite clay or a mixture of an $NH_4$-, K- or $NH_4$/K-ionic compound with a smectite clay which mixture is then contacted with the soil and subjected to drying and wetting cycles with water.

## CHARACTERISATION OF BENTONITES PRIOR TO TESTING WITH SOILS

In a first series of experiments the following bentonites were characterised:

B1: Source: Kimolos, Prassa mastic, Greece of white quality;
B2: Source: Kimolos, Lutra, Greece of yellow quality;
B3: Malucca, Sardinia of pink quality; and
B4: Possis, Sardinia of grey quality.

These bentonites are typical for commercially available bentonites in that exchangeable ions mainly consist of calcium, magnesium and sodium. There is only about 1 to 3% potassium in any of the samples. All samples were obtained from CECA, Velizy-Villacourby, Belgium. Each sample was measured for the CEC and RIP of the virgin material. The results are given in Table 1 with comparative examples of a sandy and an organic soil. From the values it can be seen that the bentonites generally show somewhat higher values of both CEC and RIP in the virgin state than a sandy or an organic soil but well below those reported for illite and for homoionic bentonites subjected to wetting and drying cycles.

Table 1

| Characterisation of the test bentonites, RIP and CEC values | | |
|---|---|---|
| ⇓Bentonite / Test ⇒ | CEC cmole/kg | RIP cmole/kg |
| B1 | 93 | 165 |
| B2 | 78 | 91 |
| B3 | 126 | 120 |
| B4 | 129 | 17 |
| sandy soil (typical) | 15 | 46 |
| organic soil (typical) | 70 | 72 |

The four types of bentonite samples B1-B4 were ground and sieved (1mm), mixed with potassium carbonate powder (100 cmole/kg) and water, for example 40 grams of clay were added to 20 mMole $K_2CO_3$ and 70 ml deionised water. The suspension was shaken and centrifuged. The potassium concentration in the supernatant liquid was measured to estimate the amount of potassium exchanged and then the samples were dried. No attempt was made at complete saturation with potassium. The potassium saturation values are given in Table 2 and they vary from about 66% to complete saturation. In accordance with all the embodiments of the present invention complete saturation of the 2-1 layer phyllosilicate, e.g. bentonite with a monovalent cation is not necessary. It is preferred if the monovalent cationic saturation is at least 25%, more preferably more than 50% and most preferably more than 70%. The samples were subjected to 40 wetting and drying cycles with water. The RIP value results are also given in Table 2.

Table 2

| RIP values of K-bentonites after 40 w/d cycles | | | | |
|---|---|---|---|---|
| Bentonite sample | Gross value (powder method) cMole/kg | Net value (powder method) cMole/kg | Net value (suspension) cMole/kg | Estimated K-saturation of the bentonite % |
| B1 | 245 | 80 | 420 | 93 |
| B2 | 451 | 360 | 780 | 78 |
| B3 | 1390 | 1270 | 1570 | 126 |
| B4 | 1130 | 1110 | 1480 | 129 |
| Wyoming | | | 190 | |

In addition, a suspension of the four bentonites B1 to B4 as well as a Wyoming bentonite were prepared by contacting the bentonites with 1M aqueous potassium chloride solution and obtaining 100 % potassium saturation by dialysis. These samples were then dried and subjected to 40 wetting and drying cycles by subjecting the material to drying periods at 50 to 60°C in an oven followed in each cycle by wetting. The results are also shown in Table 2.
From the measured gross values for the relevant material minus the starting values from Table 1 for the material with the same method of preparation, the net value of RIP contribution by the modified. These net values vary from as low as 190 up to 1570 cmole/kg and the higher values are similar to that obtained for illite and w/d cycled homoionic K-bentonites in previous experiments. Using homoionic potassium bentonite (suspension preparation), the RIP values are generally higher than those obtained with the first simple mixing and shaking preparation procedure (powder procedure).
The results shown in Table 2 confirm previously obtained values for cycled homoionic K-bentonites and also confirm the currently held view that subjecting homoionic K-bentonites to wetting and drying cycles does not provide any significant advantage over illite. These results have been known for many years, and in particular, the lack of significant improvement compared with illite has provided no incentive to use homoionic K-bentonites in the fixation of radiocaesium in soils.

## FIRST SERIES OF EXPERIMENTS WITH SOILS

Mixtures of soils and bentonite samples were prepared in the following ways. Firstly, samples of the bentonites B1 to B4 were ground and sieved (1mm), and then mixed with potassium carbonate powder (100 cmole/kg) and water, for example 40 grams of clay were added to 20 mMole $K_2CO_3$ and 70 ml deionised water to a paste (the powder method). The paste was incubated for 5 days at room temperature and then thoroughly mixed with sandy soil samples in the ratios 5 and 10 % and dried. The sandy soil had the properties shown in Table 1. The sandy soil/bentonite/$K_2CO_3$ mixtures were wetted with water in the ratio 35 ml to 100 g solid and incubated at room temperature for 5 weeks. The samples were then dried and subjected to 40 wetting and drying cycles in an oven at 50 to 60°C. The RIP values of the mixtures were then measured. The results for 5% bentonite loading are given in Table 3 and for 10% loading in Table 4. The absolute values obtained for each soil/bentonite mixture is given in the "gross" column. The values in Table 1 were used to subtract from the measured values the contribution to the RIP made by the sandy soil, thus obtaining the contribution from the modified bentonite. These results are given in Tables 3 and 4 as the net values. These values were then converted into RIP values per kg of bentonite added, i.e. based on the actual quantity of bentonite in the respective sample, and these results are given in the column "normalised".

Table 3

| RIP values, sandy soil, 5% K-bentonite, 40 w/d cycles | | | | | | |
|---|---|---|---|---|---|---|
| Bentonite | Powder method using potassium carbonate, cMole/kg | | | Suspension method using potassium chloride, cMole/kg | | |
| | gross | net | normalised | gross | net | normalised |
| B1 | 112 | 60 | 1260 | 95 | 51 | 1120 |
| B2 | 145 | 97 | 2040 | 130 | 86 | 1900 |
| B3 | 258 | 208 | 4370 | 268 | 221 | 5000 |
| B4 | 250 | 205 | 4310 | 240 | 196 | 4100 |
| Wyoming | | | | | | 1000 |

A second set of samples were prepared with bentonites B1 to B4 and a Wyoming bentonite by a second preparation method (suspension method). A suspension was formed of about 5% of the respective bentonite in a 1M aqueous solution of potassium chloride and dialysed to form homoionic K-bentonite samples. Each suspension was added to a sandy soil sample in the ratio of 5% and mixed into a homogenised paste. The paste was incubated for four weeks at room temperature. The samples were then subjected to 40 wetting and drying cycles in an oven at 50 to 60°C. The results are given in Table 3.

Table 4

| RIP values, sandy soil, 10% K-bentonite, powder (potassium carbonate) method, 40 w/d cycles | | | |
|---|---|---|---|
| Bentonite | gross, cMole/kg | net, cMole/kg | normalised, cMole/kg |
| B1 | 132 | 80 | 880 |
| B2 | 196 | 147 | 1620 |
| B3 | 398 | 345 | 3790 |
| B4 | 357 | 314 | 3450 |

It is noticeable that the results for the two methods of preparation (powder or suspension) are almost the same, i.e. independent of the method of preparation in contrast to the results given in Table 2. In both Tables 3 and 4, the ratio of the normalised RIP value for each soil/bentonite/ionic potassium composition to the value given in Table 2 for the corresponding material are indicated for the same preparation method of the bentonite. What is remarkable in Table 3 and 4 is that subjecting soil/bentonite/ionic potassium compositions to wetting and drying cycles generates RIP values in the soil which are 2.5 to 15 times greater per kg of bentonite than the results when the same bentonite/ionic potassium compositions are subjected to wetting and drying cycles without the soil. This unexpected result may be used advantageously in accordance with embodiments of the present invention for radiocaesium fixation in contaminated soils and on contaminated meadows as well as for a prophylactic treatment of soils and meadows to build up a protective RIP capability before nuclear contamination.

The results given in Table 4 using the first preparation method (potassium carbonate powder) but using a bentonite/sandy soil ratio of 10%, show gross values greater than those of Table 3 because of the larger contribution provided by the higher concentration of bentonite. The normalised results are, however, slightly lower than the results for the same method given in Table 3. This would indicate that there is probably an optimum bentonite loading below 10% which maximises the efficiency of radiocaesium fixation pre kg of added bentonite.

## SECOND SERIES OF EXPERIMENTS WITH SOILS

In a second series of experiments 50 g of the organic soil with the properties given in Table 1 were added to 50 ml of K-bentonite suspensions formed respectively from bentonites B1 to B4 and a Wyoming bentonite in a 5% clay to soil ratio. The wet soil/clay mixture was dried without incubation period and submitted to 40 wetting and drying cycles in an oven at 50 to 60°C. The results are shown in Table 5. The RIP yields per kg of added bentonite are significantly higher than those obtained with sandy soils in spite of much lower K saturation of the soil-bentonite system. The results indicate that the use of potassium bentonite in organic soils may also provide good radiocaesium fixation improvements.

Table 5

| RIP values of organic soil with 5% K-bentonite (suspension method) 40 w/d cycles | | | |
|---|---|---|---|
| Bentonite | gross, cMole/kg | net, cMole/kg | normalised, cMole/kg |
| B1 | 202 | 130 | 3100 |
| B2 | 228 | 156 | 3760 |
| B3 | 412 | 340 | 7690 |
| B4 | 386 | 314 | 6020 |
| Wyoming | 164 | 92 | 2050 |

## THIRD SERIES OF EXPERIMENTS WITH SOILS

In a third series of tests, ammonium bentonite suspensions were made generally in accordance with the method of making suspensions mentioned with respect to the first series but substituting ammonium chloride for potassium chloride and only using bentonites B1 and B4. These suspensions were added to sandy soil at a rate of about 4.5%. The results are given in Table 6. Significantly lower values for RIP contribution per kg of bentonite added were obtained in comparison with Table 3, indicating that ammonium homoionic smectites are a less preferred embodiment of the present invention.

Table 6

| RIP values of Ammonium bentonite enriched sandy soil (4.5%), 40 w/d cycles | | | |
|---|---|---|---|
| Bentonite | gross, cMole/kg | net, cMole/kg | normalised, cMole/kg |
| B1 | 74 | 28 | 670 |
| B4 | 101 | 55 | 1265 |

## FOURTH SERIES OF EXPERIMENTS WITH SOILS

In addition to the small scale tests laboratory tests mentioned above, larger scale pot plant testing was also carried out. The availability of radiocaesium in soil at widely varying degrees of K-saturation in the exchange complex and covering a broad range of K concentrations in the soil solution was studied under test conditions. Homoionic K-bentonite was used as a soil additive to modify the K-saturation of the soil. The homoionic K-bentonite was prepared by equilibrating commercially available Wyoming bentonite of predominantly the sodium form (CEC 97 eq/g) with an aqueous solution of 1N potassium chloride. Phase separation was achieved by membrane dialysis (solid/liquid ratio 1/50). The liquid was changed twice daily for 7 days. No detectable sodium, calcium or magnesium levels were present in the supernatant liquid after the equilibration phase. Surplus potassium in the interstitial solution was removed by washing the K-bentonite with distilled water on a daily basis for 5 days with a solid liquid ratio of 1/50. The final suspension was centrifuged at high speed, the sediment collected, air dried and ground.

Podzolic soil, sampled at the nuclear site in Mol (Belgium) having a low CEC (2 $cmol_c$ $kg^{-1}$) and low RIP (10 $cmol_c$ $kg^{-1}$) was used as the test soil. The RIP value of a soil is preferably measured in accordance with the present invention by the method described in Wauters, J., Elsen, A., Cremers, A., Konoplev, A.V., Bulgakov, A.A. & Comans, R.N.J., Prediction of solid/liquid distribution coefficients of radiocaesium in soils and sediments, Part one: A simplified procedure for solid phase characterisation. *J. Appl. Geochem.* 1996, **11,** 589-594). Two series of soil systems were prepared: the "A" series of 6 samples of 6 kg each, containing respectively, 2, 1, 0.75, 0.5, 0.25 and 0 % K-bentonite (coded A-1 to A-6 whereby A-6 is the control) and the "B" series comprising 6 samples (also 6 kg each, coded B-1 to B-6) all containing 1 % K-bentonite. Dry Mol (BE) podzolic soil, containing the appropriate dose of K-bentonite were wetted (up to field capacity: 250 L $kg^{-1}$) with mixed solutions of $KNO_3$ and $Ca(NO_3)_2$ such as to achieve a (roughly) constant K concentration (series A) or increasing K concentrations (series B) in the soil solution. A control soil (also 6 kg), having received no salts, was also included in the study (soil sample "C"). All soils were labelled with $^{134}Cs$ (added to the salt solutions) at 400 Bq $g^{-1}$ dry soil. All systems were incubated for 4 weeks to achieve ionic equilibrium. After incubation, soils were characterised in terms of exchangeable cation content, effective CEC (sum of exchangeable cations), soil solution composition (using ultra-centrifugation-filtration techniques), $^{134}Cs$ activity in the soil solution (using K-spectrometry) and RIP.

Soil samples were then subdivided in seven 1 litre pots used for the measurement of $^{134}Cs$ transfer to rye-grass (*Lolium multiflorum* L.) in a greenhouse experiment. 0.65 g seed was used per pot. At two to three weeks' time intervals, rye-grass was harvested and the dry weight and K-activity determined for each of the 7 pots. Pots were brought to weight with demineralised water every second day. After the third harvest, the soils were fertilised to meet nutrient demand. In total, 7 cuts were harvested, covering a time span of 15 weeks. After the seventh cut, for each of the 13 treatments, 3 pots were taken at random, dismantled and soils separated from plant roots for characterisation as detailed before. All chemical analyses were made in triplicate.

For all the samples the K-status, the loss in CEC and exchangeable K, RIP and $K_D^{(Cs)}$ values were determined. Initial exchangeable K contents ranged from 1 to about 0.1 $cmol_c$ $kg^{-1}$ soil in series A (fractional K-loading, $Z_K$, from 0.35 to 0.05 for A-1 to A-6, respectively) and 0.57 to 0.4 $cmol_c$ $kg^{-1}$ in series B ($Z_K$ from 0.25 to 0.17 for B-1 to B-6, respectively). For the control soil, the value is 0.11 $cmol_c$ $kg^{-1}$ ($Z_K = 0.08$). The K-concentration ([K]) in the soil solution covers a range of about 10 to 6 mM (A-1 to A-6) and 6 to 19 mM (B-1 to B-6). The K-concentration in the control soil is 1.7 mM.

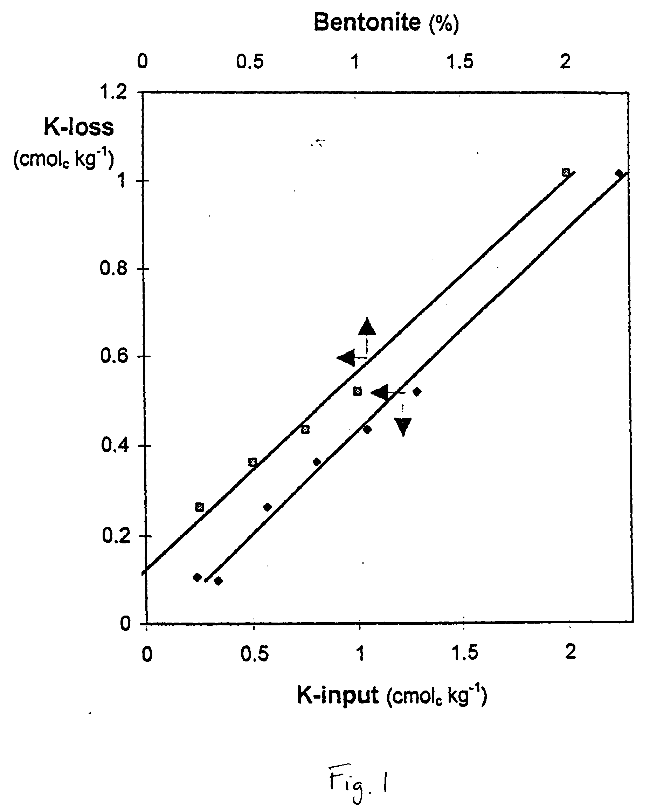

For all systems a very significant loss occurs in the CEC and such loss could quantitatively be accounted for - or very nearly so - by the loss in exchangeable potassium. Fig. 1 demonstrates that the K-loss is linear in the amount of K-bentonite added and the initial amount of K present (A-series) and that a significant K-loss occurs as well in the control systems (A-6 and C). In series B at constant (1 %) K-bentonite content, the K-loss amounts to 0.48 ($\pm$0.19) $cmol_c$ $kg^{-1}$ (comparable to the K-loss of A-2 also with 1 % K-bentonite). In all, it is seen that after soil incubation, K-losses amount to some 50-70 % of total K input.

RIP values of the incubated soils (values not shown) showed a slight increase relative to the control soils (A-6 and C), on the average by a factor of about 1.5 to 2.5. $K_D^{(Cs)}$ values are quite low (a range of 10-30 L $kg^{-1}$) as could be expected from the low RIP values and the high K-concentrations, [K], in the soil solution. The numerical values of $K_D^{(Cs)}$ were found to be in excellent agreement with predictions based on RIP and [K] values.

The results on the K-status of the "end-soils" are summarised in Table 7, showing the K loadings in the exchange complex, K concentrations in the soil solution and $K_D^{(K)}$ values, a parameter used in the quantitative analysis further below. It is seen that for all systems (except A-1), a severe K-depletion has occurred. The fractional K-loading $Z_K$ (expressed with respect to the CEC of incubated soils) has decreased to values around 0.06 (series A) and 0.01-0.02 (series B and C). [K] varies in the range of 3.6 to 0.04 mM (series A) and 0.8 to 0.12mM (series B). In the control soil, [K] has dropped to 0.015 mM.

Table 7 shows a summary of in-situ $K_D^{(Cs)}$ values as obtained from $^{134}Cs$ activities of the soil and in the soil solution (range of 0.1 to 0.6 Bq $ml^{-1}$). Standard deviations are - not unexpectedly - relatively high (45 % on average).

$K_D^{(Cs)}$ values cover a range of about 1000 to 6000, i.e. some two orders of magnitude higher than what was obtained in the soils at the start of the experiment. RIP values of all soils are also shown in the table (column 6). It is seen that they have increased drastically. For the 1 % K-bentonite soils (series B and A-2) RIP = 98 (±21) $cmol_c$ $kg^{-1}$ on average, i.e. an increase by a factor of 10. In series A, the effects are linear with K-bentonite content. RIP values are furthermore entirely consistent with $K_D^{(Cs)}$ values. This is illustrated by the nearly perfect agreement of experimental and predicted $K_D^{(Cs)}$ values (shown in the table), using the equation

$$K_D{}^{(Cs)} = \frac{RIP}{[K]} \tag{1}$$

The generation of specific sites, evidenced through RIP values is thus quantitatively reflected in the solid/liquid partitioning of radiocaesium. The reason for the increased RIP with K-bentonite addition may be explained as being related to the reduced lattice spacing of the collapsed layer structure of the K-bentonite. The original sodium bentonite had a lattice spacing of 12.3 to 17.6 X as determined by X-ray diffractometry. For the K-bentonite it was between 12.0 and 11.6 X, i.e. approaching the 10 X of illite materials.

The loss in exchangeable K and the formation of specific sorption sites, both linear in the dose of K-bentonite, are interrelated. The surprising aspect in the data is that the addition of initially homoionic K-bentonite to the soil, leads to the formation of specific selective sorption sites for caesium, in spite of the fact that the major portion of the K of its exchange complex is lost and transferred to the exchange complex of the surrounding soil material. The loss in exchangeable K which was observed at the end of the incubation period (wet conditions) was not reflected in a significant raise in RIP (and $K_D$) values. The building-up of the specific selective sorption pool for caesium was brought about during the succeeding weeks - at room temperature - as a result of drying and wetting processes. Secondly, the formation of these specific sites also follows from the addition of K-bentonite and not only from a loss of potassium from the soil as the systems showing K loss in the absence of K-bentonite (the controls A-6 and C) failed to develop any specific sorption sites.

The RIP ascribable to the K-bentonite-derived material in the soil can be obtained from the difference of the overall RIP of the soil/K-bentonite mixtures and that of the virgin soil. Expressing such a difference per gram of K-bentonite, a value of 9000 (± 2500) $cmol_c$ $kg^{-1}$ is obtained. Hence, the RIP value provided by the K-bentonite-derived material in the soil exceeds the one of the virgin soil by some three orders of magnitude and that of illite by a factor of seven. If we assume this pool of specific sites to be of the same nature as for illite and soils, characterised by $K_C^{FES}$ values of 500 to 1000, then the capacity of the specific site pool would amount to 9-18 $cmol_c$ $kg^{-1}$ or 10 to 20 % of the CEC of the original material.

The question regarding the nature of the pool of specific sorption sites can be resolved by normalising $K_D^{(Cs)}$ values relative to $K_D^{(K)}$, i.e. by expressing radiocaesium sorption in terms of some the overall Cs to K selectivity coefficient $\overline{K}_C^{(Cs/K)}$. Results are summarised in columns 7 and 8 in Table 7 showing $K_D^{(Cs)}/K_D^{(K)}$ ratios ($K_D^{(Cs)}/K_D^{(K)} = \overline{K}_C^{(Cs/K)}$) at the various K loadings of the systems. There is a most significant feature: the values for the overall selectivity coefficient at the very low end of the K-loading scale (B-4 to B-6) are nearly five times higher than the Cs to K selectivity coefficients commonly found for the FES in illite and soils. The compositions and methods of the present invention are therefore capable of generating a most powerful selective sorption process. The effect of K-loading on $\overline{K}_C^{(Cs/K)}$ can be expressed as follows :

$$\overline{K}_C{}^{(Cs/K)} = \frac{K_D{}^{(Cs)}}{K_D{}^{(K)}} = K_D{}^{(Cs)} \frac{[K]}{[FES+K_{REC}]} \tag{2}$$

in which [FES] refers to the FES capacity (in the K-form) and $K_{REC}$ to the amount of K in the Regular Exchange Complex. The equation can be rewritten in the form :

$$\overline{K}_C{}^{(Cs/K)} = \frac{K_D{}^{(Cs)}}{\dfrac{[FES]}{[K]}\left\{1 + \dfrac{K_{REC}}{[FES]}\right\}}$$

$$= \frac{K_D^{(Cs)}}{K_D^{FES(K)}} \cdot \frac{1}{\left\{1 + \dfrac{K_{REC}}{[FES]}\right\}} \qquad (3)$$

in which $K_D^{FES\,(K)}$ refers to the $K_D$ of K between the FES and the soil solution. The upper limit of this equation is of particular interest: it is seen that, when $K_{REC} \to 0$, $\overline{K}_C^{(Cs/K)}$ approaches some upper limit, i.e. the FES-characteristic Cs to K selectivity coefficient (since the sorption of Cs is confined to the FES).

The dependence of $\overline{K}_C^{(Cs/K)}$ on K loading for both series A and B is in qualitative agreement with equation (3). It is seen that for the systems A-2 to A-6 which are characterised by nearly constant K-loading (col. 2) and decreasing FES (reduced K-bentonite loading to which FES is related), $\overline{K}_C^{(Cs/K)}$ decreases from A-2 to A-6 as predicted (col. 7 and 8). In the B-series, characterised by a constant FES value (constant K-bentonite loading), $\overline{K}_C^{(Cs/K)}$ increases with decreasing K-loading, again as predicted. The very fact that $\overline{K}_C^{(Cs/K)}$ continues to increase at the lower end of the K-loading range - from 0.032 to 0.020 $cmol_c$ $kg^{-1}$ - indicates that the FES capacity is probably lower than the 0.02 $cmol_c$ $kg^{-1}$, or at the very maximum, quite near to this value. It is worthwhile to attempt a description of the data in the B-series in terms of equation (3). This equation can be put in a simpler format. Since $K_{REC} = K_{TOTAL} - [FES]$ :

$$\overline{K}_C^{(Cs/K)} = K^{FES,(Cs/K)} \frac{[FES]}{K_{TOTAL}} \qquad (4)$$

in which $K_{TOTAL}$, refers to the overall amount of exchangeable K. Evidently, when $K_{TOTAL} \to [FES]$ then $\overline{K}_C^{(Cs/K)} \to K_C^{FES\,(Cs/K)}$. We may assume that all of the adsorbed radiocaesium is intercepted in the "bentonitic" FES. This is quite a reasonable assumption since the RIP contribution of the K-bentonite-derived material in the soil exceeds the one of the soil itself by an order of magnitude (10 $cmol_c$ $kg^{-1}$ of soil versus 90 $cmol_c$ for the 10 g bentonite).

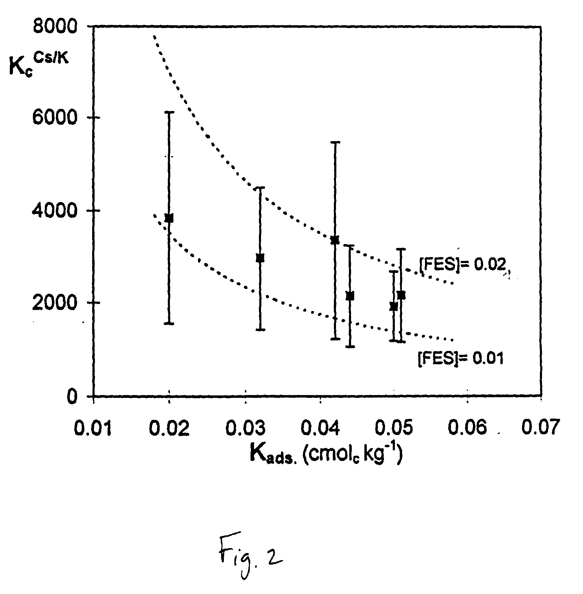

Fig. 2 shows the result of a fit based on the use of [FES] and $K_C^{FES\,(Cs/K)}$ as two adjustable parameters. It is apparent that a $K_C^{FES\,(Cs/K)}$ value of 7000 and a [FES] range of 0.01 to 0.02 $cmol_c$ $kg^{-1}$ gives a good description of the data. These numbers correspond to a FES capacity (10 g bentonite $kg^{-1}$ soil) of 1 - 2 $cmol_c$ $kg^{-1}$ or 1-2 % of the CEC of the original bentonite, expressing these numbers with respect to the CEC of the collapsed bentonite, we obtain values of 2 to 4 % of the overall CEC.

The $K_C^{FES\,(Cs/K)}$ and the range of FES capacity have been checked by making predictions for $\overline{K}_C^{(Cs/K)}$ for all systems (A and B series). The results are shown in the table. It is seen that the particular combination gives an excellent description for all systems, thus indicating that the nature of the pool of specific sorption sites is different from the one commonly found. The fact that $K_C^{FES\,(Cs/K)}$ exceeds the values for soils and sediments (and illite) does not necessarily mean that the present invention is limited to the nature of the sites being different. It is included within the present invention that the fraction of superselective sites in the material formed in the soil is higher than in illite and soils.

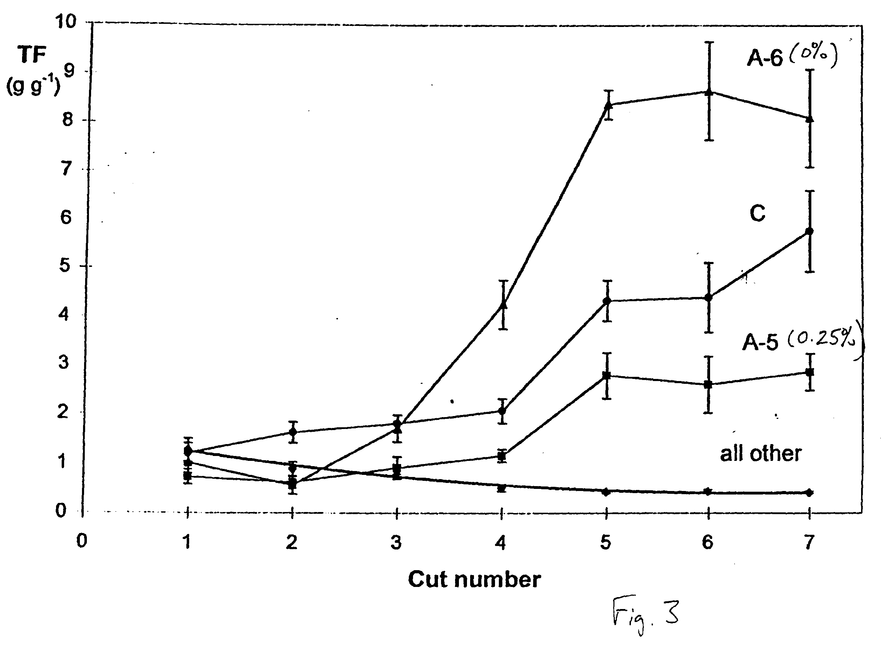

Fig. 3 shows a summary of the soil-plant transfer factors (TF) for all systems studied and for the seven cuts. In total 91 $TF_s$ were measured (13 systems x 7 cuts) each of the measurements being made in triplicate, i.e. 637 data points. In general, reproducibility is quite good: the standard deviation for the 91 $TF_s$ was 14 % on average (extreme values of 4 and 30 %). The lower curve gives a summary of all TF values for the systems A-1 to A-4 and B-1 to B-6 (0.5 to 2 % K-bentonite additions). No significant differences in TF were found for these 10 systems for each of the seven cuts. Each data point in the figure is thus an average of 70 observations. The data are reasonably well described by the empirical equation

$$TF = 1.603 - 0.378\,n + 0.030\,n^2 \, , \; R^2_{adj} = 0.96 \qquad (5)$$

in which n refers to the cut numbering.

The steady decrease in TF for the samples with more than 0.25% added K-bentonite reflects the build-up of the FES pool, apparently completed at the 5th cut. The overall TF average of 5th, 6th and 7th cut, for the 70 TF values (each obtained as the mean of 7 replicas) is 0.425 ($\pm$0.036). If we consider the value of the intercept on the TF axis as representative for the RIP status at the end of soil incubation (i.e. the start of the transfer experiment) then the ratio of this intercept and the plateau value of TF towards the end of the experiment, can be taken as a quantitative measure of the growth of the RIP during the uptake experiment. This ratio is 4. Remembering that the RIP values of the soils (with addition of 1 % K-bentonite) at the end of incubation had increased by a factor of 1.5 to 2.5, relative to the original soil, then there is agreement between the effect on the TF and the change in RIP from the original soil to the one harvested at the end of the transfer experiment, i.e. a factor of 10.

The constancy of TF values for any given cut, irrespective of the K status (for systems A-1 to A-4 and B-1 to B-6) can be explained on the basis of the effect of K concentration in the soil on $K_D^{Cs}$ and the concentration factor CF, defined as the radionuclide ratio in the plan biomass (shoot) to that in the soil solution. TF can be written as:

$$TF = \frac{CF}{K_D^{Cs}} \qquad (6)$$

The table gives a survey of the CF values as obtained from $^{134}$Cs activities in the soil solution after cut 7. It is seen that CF values (A-1 to A-4 and B-1 to B-6) cover a range of 300 to about 3000 and the $K_C^{(Cs)}$ values cover a range of 700 to 6300 both, therefore, of one order of magnitude. For a K concentration range of 3.6 to 0.17 mM there is an exact compensation between CF and $K_D$: lowering [K] leads to an increase in $K_D$ which is exactly paralleled by a linear increase in CF, resulting in an invariance in TF.

TF values for the control systems are seen to be higher (after cut 5) by a factor of 10 (control sample C: TF = 4.3 to 5.8) and 20 (control sample A-6: TF = 8.1 to 8.7) than the samples in accordance with the present invention. Comparison between B-6 and C shows that $K_D^{(Cs)}$ values for the two are similar (as can be expected on the basis of RIP and [K] values). However, the very low [K] value in the control leads to a very sharp increase in CF, thus leading to a tenfold increase in TF. The A-6 system shows a very high CF as well and the $K_D^{(Cs)}$ value is half the value of C, i.e. the radiocaesium level in the soil solution is twice as high; accordingly TF is twice as high as well.

The system A-5, with 0.25 % K-bentonite addition shows TF values intermediate between the 1 % K-bentonite systems and control sample C (TF = 2.75). Again, this is essentially the result of a sharp increase in the CF at the low [K] value : $K_D^{(Cs)}$ values of A-4 and A-5 are identical but CF values differ by a factor of 6.

From the above the build-up of the radiocaesium interception potential of a soil, resulting from the application of K-bentonite and the in-situ generation of specific sorption sites is quantitatively reflected in a reduction of the soil-plant transfer. This build up is completed only after a significant number of wetting and drying cyles, for example, at least 10 wetting and drying cycles, more preferably more than 20 cycles and most preferably greater than 40 cycles. Lowering the soil-chemical availability of radiocaesium (increasing $K_D$) in soils of low RIP brings about much lower K concentration in the soil solution (as compared to high RIP soils) which in turn leads to a very significant raise in CF, and thus in TF. In other words, for some given level of K-fertilisation, TF should be linear in the RIP value. In view of the fact that the RIP of the bentonitic specific sorption pool exceeds the one of podzolic soils (RIP is generally around 20 to 40 cmol$_c$ kg$^{-1}$) by a factor of 500 to 250, this process can substantially decrease the soil-to-plant TF of radiocaesium in those soils. The equilibration of the K-bentonite with the surrounding soil leads to a lesser K-depletion as is borne out by the higher RIP yields obtained at high K-bentonite dose and the very low RIP yield at 0.25 % K-bentonite (A-5) (column 6 in the table). This system shows a low, non-linear RIP value, which is most likely related to the low K-saturation in the system ($Z_K$ = 0.08) and a partial failure to collapse. Further, concentrating the K-bentonite in the upper soil would make it more sensitive to wetting-drying processes which should promote the build-up of the specific sorption pool. In accordance with other embodiments of the present invention this selective site generating material may useful in other applications such as in the nuclear industry as a selective absorbent, for instance in water treatment. Its RIP exceeds the value of mordenite and clinoptilolite, used in treating waste streams, by a factor of 1.5 to 3.

In accordance with one embodiment of the present invention the selective site generating 2-1 layer phyllosilicate is - in a first step - mixed with the upper few centimetres of the soil or alternatively, somewhat deeper, e.g. down to the plough depth. The soil is then subjected to wetting and drying cycles, e.g. as created by the natural phenomena of rain and sun, alternatively also including water irrigation. The application rate of the composition or mixture based on the actual depth of soil into which the selective site generator is mixed is preferably 0.25% or more. Application into the soil may be advantageous when the radiocaesium contamination is already a few years old and has a deeper profile than immediately after contamination. Also included within the present invention is the preparation of soil beds in suitable geographical locations for wetting drying cycles, addition of the potassium bentonite or potassium salt/bentonite mixture to the soil, cycling the material and then using the soil in which selective sites have been activated as a soil dressing.

Alternatively, and more preferred, in accordance with another embodiment of the present invention the selective site 2-1 layer phyllosilicate is merely spread on the surface of soil or meadow land. During wetting cycles (rain or irrigation) the selective site generation occurs by seepage of the applied material into the top layer of soil. This procedure has several advantages, e.g. the 2-1 layer phyllosilicate is applied directly on the surface layer where there is high concentration of Cs immediately after contamination; the 2-1 layer phyllosilicate is subjected to more effective and/or higher frequency wetting and drying cycles than when it is buried deeply, thus generating Cs selective sites co-located with the major initial contamination, thus facilitating Cs interception; Cs fixation is more effective in the build-up stage of the RIP, e.g. during the first 20 wetting and drying cycles; lower doses may be applied; when irrigation is used, less water (sprinkling) may be effective in producing effective wetting cycles; flexibility - after an initial period the surface layer may be buried by ploughing.

Various methods of application are included within the scope of the present invention, whereby each method is a separate embodiment of the present invention. K-bentonite may be applied as a suspension or slurry, e.g. prepared by mixing raw bentonite powder and a potassium salt, such as potassium carbonate, and water into a slurry. Alternatively, raw bentonite may be applied followed by sprinkling with a solution of a potassium salt such as potassium carbonate. Yet again, a mixture of bentonite and potassium salt powder may be sprayed or deposited by an alternative suitable means and the powder coating treated with a controlled amount of water to soak the powder into the upper layer of soil.

The K-bentonite clay in accordance with the present invention may be prepared from naturally occurring K-bentonite. The at least partly exchanged $NH_4$-, K- or $NH_4$/K-smectite clays in accordance with the present invention may also be prepared from the naturally occurring (Ca-, Mg-, Na-) smectite materials by preparing an aqueous slurry of the clay and then converting to the at least partly exchanged $NH_4$-, K- or $NH_4$-/K-smectite clay by passing the slurry over a bed of cation exchange resin in the $NH_4$- and/or K- form. Alternatively, the clay can be mixed with water and a $NH_4$- and/or K- salt such as ammonium and/or potassium carbonate and the mixture sheared in a pugmill or an extruder. The at least partly exchanged NH4-, K- or NH4-/K-smectite clay may be dried at 80 to 90°C and ground to powder or pellets or applied as a slurry. For applications for soil treatment, the starting clay may be used in its crude form, i.e. including gangue or non-clay material or in a beneficiated form, i.e. with the gangue removed. Alternatively, mixtures of the smectite clay powders with a potassium or ammonium salt may be used for direct application to the soil.

A non-exhaustive list of representative 2-1 layer phyllosilicates useful in accordance with the present invention includes montmorrillonite, bentonite, beidillite, nontronite, hectorite, saponite, stevensite, as well as mixtures thereof and interstratifications with other mineral layers.

One embodiment of the present invention includes a method of applying at least partly exchanged $NH_4$-, K- or $NH_4$-/K-smectite clays in accordance with the present invention to cultivated (ploughed) soils already contaminated with radiocaesium. One method may include applying a slurry of the at least partly exchanged $NH_4$-, K- or $NH_4$-/K-smectite clays in accordance with the present invention to the surface of the soil in an amount of 0.5 to 2% or more, e.g. about 1% or more, based on the top 3 to 10 cm of soil (where the majority of the radiocaesium may lie). The clays may be applied during irrigation of the soil. The clay may be left for a season so that it is subjected to rain wetting and drying cycles, develops thereby the selective sites and fixes the radiocaesium. The top layer of soil may then be deeply ploughed in to remove the radiocaesium from crop rooting zone but leaving the radiocaesium fixed in the clay and not available for contamination of water supplies. Alternatively, dried powder or pellets of the at least partly exchanged $NH_4$-, K- or $NH_4$-/K-smectite clays in accordance with the present invention may be ploughed into the top 3 to 10 cm of the soil at a rate of 0.5 to 2% or more, e.g. about a 1% rate or more, and left for a period of time until this top layer has been subjected to rain wetting and drying cycles (e.g. for one year) and the selective sites have been developed. Then, the top layer may be deep ploughed to remove the fixed radiocaesium from crop root zone.

Another method in accordance with the present invention is to apply at least partly exchanged $NH_4$-, K- or $NH_4$-/K-smectite clays in accordance with the present invention to non-ploughed soils (e.g. meadows, grazing land) already contaminated with radiocaesium. This may be done immediately after contamination. One method may include applying a slurry of the at least partly exchanged $NH_4$-, K- or $NH_4$-/K-smectite clays in accordance with the present invention to the surface of the meadows in an amount of 0.5 to 2% or more, e.g. about 1% or more, based on the top 3 to 10 cm of soil. Additionally, the surface of the meadows may be broken up in order to bring the at least partly exchanged $NH_4$-, K- or $NH_4$-/K-smectite clays in accordance with the present invention into contact with the soil. The meadows are then left fallow for a period of time, e.g. one year, for a plurality of rain wetting and drying cycles. The top 3 to 10 cm of soil may then be deeply ploughed to remove the radiocaesium from grass root level and the grass resown.

Several embodiments of the present invention make use of the at least partly exchanged $NH_4$-, K- or $NH_4$-/K-smectite clays in accordance with the present invention which are subjected to wetting and drying cycles before use. Pre-cycled clay in accordance with the present invention may be produced by first producing the at least partly exchanged $NH_4$-, K- or $NH_4$-/K-smectite clays as described above. The clay is then mixed with a suitable soil and subjected to cycles of wetting with water and drying, for instance, it may be placed in large trays and alternatively wet with water and dried with hot air at about 80 °C. Preferably, this may be done where electrical air heating is cheap - e.g. in countries with an excess of hydroelectric power. Alternatively, the clay/soil mixtures may be exposed in trays to the wetting and drying effect of rain and strong sun, respectively. Preferably, at least 10 and preferably 20 or more cycles are applied to generate the radiocaesium selective adsorbent sites. In accordance with these embodiments of the present invention, pre-cycled clay/soil mixtures may be prepared by the method as described above whereby the clay is mixed with a suitable soil in a suitable ratio, e.g. in the range 0.25 to 10%.

Pre-cycled clay/soil in accordance with the present invention may be used for the treatment of food or foodstuffs contaminated with radiocaesium, e.g. milk. The contaminated food is in liquid, paste or slurry form or is converted to one of these forms. The pre-cycled clay/soil in accordance with the present invention is then added to the liquid food and mixed thoroughly therewith and then removed. By selection of the particle size of the clay and soil, it can be selectively removed from the food by filters. Further, pre-cycled clay/soil mixtures in accordance with the present invention may be included in water filters instead of or in addition to activated charcoal or other absorbents or adsorbents for selective removal of radiocaesium.

In accordance with another embodiment of the present invention soils may be treated prophylactically with at least partly exchanged $NH_4$-, K- or $NH_4$-/K-smectite clays or pre-cycled at least partly exchanged $NH_4$-, K- or $NH_4$-/K-smectite clays or clay/soil mixtures in accordance with the present invention. The aim is to build up a large pool of radiocaesium selective sites over a period of years especially in the top 5 to 10 cm of the soil in case of contamination at a later date. Hence, in accordance with another embodiment of the present invention at least partly exchanged $NH_4$-, K- or $NH_4$-/K-smectite clays or precycled clays or pre-cycled clay/soil mixtures in accordance with the present invention may be included as a component in soil fertilisers, pH stabilisers and other soil additives or herbicides, pesticides or fungicides for spraying onto crops. Although the quantities applied thereby may be low, the combined effect over several seasons may be sufficient.

In accordance with another embodiment of the present invention pre-cycled clay in accordance with the present invention may be sprayed as a slurry onto contaminated surfaces, e.g. foliage, grass, immediately after contamination or spread as pellets into a spill of radioactive material to selectively fix radiocaesium.

In a further embodiment of the present invention at least partly exchanged $NH_4$-, K- or $NH_4$-/K-smectite clays in accordance with the present invention are added to commercial soil supplies to provide additional protection to the soil. This material may then be used as a top soil in contaminated regions.

In the above description and in the claims any reference to at least partly exchanged 2-1 layer phyllosilicates or $NH_4$-, K- or $NH_4$-/K-smectite clays also includes complete saturation with the respective cation(s), and in particular also includes bentonite partly or completely exchanged with $NH_4$-, K- or $NH_4$-/K ions.

The present invention has been described with reference to certain embodiments and figures, but the skilled person will appreciate that modifications and additions may be made to the present invention while still remaining within the scope of the present invention as defined in the attached claims.

Table 7 Characterisation data of the soils at the end of the transfer experiment : K-status (column 1-3), experimental and predicted $K_D^{Cs}$ values and RIP (column 4-6), experimental and predicted $\overline{K}_C^{(Cs/K)}$ (column 7-8) and soil solution-plant concentration factors (column 9) (standard deviations in parenthesis).

| Soil code | $K_{soln}$ cmol$_c$ kg$^{-1}$ | $K_{soil\ solution}$ mM | $K_D^{(K)}$ L kg$^{-1}$ | $K_D^{(Cs)}$-Exp. L kg$^{-1}$ | $K_D^{(Cs)}$-Pred. L kg$^{-1}$ | RIP cmol$_c$ kg$^{-1}$ | $K_D^{(Cs)}/K_D^{(K)}$ experimental | $K_D^{(Cs)}/K_D^{(K)}$ predicted | CF L kg$^{-1}$ |
|---|---|---|---|---|---|---|---|---|---|
| A-1 | 0.589 (0.122) | 3.58 (0.51) | 1.65 (0.42) | 690 (84) | 740 (237) | 265 (76) | 418 (118) | 237 - 475 | 304 (65) |
| A-2 | 0.129 (0.012) | 0.92 (0.16) | 1.40 (0.28) | 1119 (539) | 894 (235) | 82 (17) | 800 (582) | 542 - 1084 | 416 (204) |
| A-3 | 0.133 (0.018) | 0.42 (0.11) | 3.17 (0.96) | 2214 (1306) | 1983 (559) | 83 (7) | 698 (463) | 395 - 790 | 888 (533) |
| A-4 | 0.129 (0.011) | 0.17 (0.07) | 7.72 (3.11) | 2381 (1597) | 2341 (988) | 39 (6) | 308 (174) | 271 - 542 | 1006 (704) |
| A-5 | 0.112 (0.033) | 0.09 (0.03) | 12.44 (5.32) | 2230 (1071) | 2111 (806) | 19 (4) | 179 (94) | 156 - 312 | 6384 (3180) |
| A-6 | 0.103 (0.043) | 0.04 (0.01) | 25.75 (13.60) | 2358 (860) | 2125 (1038) | 8.5 (3.0) | 92 (59) | - | 19118 (7360) |
| B-1 | 0.044 (0.002) | 0.63 (0.17) | 0.70 (0.19) | 1502 (633) | 1509 (443) | 95 (13) | 2144 (1082) | 1590 - 3180 | 634 (272) |
| B-2 | 0.051 (0.013) | 0.80 (0.15) | 0.64 (0.20) | 1382 (464) | 1297 (372) | 103 (22) | 2159 (988) | 1372 - 2745 | 544 (189) |
| B-3 | 0.050 (0.012) | 0.79 (0.12) | 0.64 (0.18) | 1233 (319) | 1210 (193) | 95 (28) | 1926 (735) | 1400 - 2800 | 494 (134) |
| B-4 | 0.042 (0.005) | 0.64 (0.10) | 0.64 (0.12) | 2147 (1300) | 2179 (543) | 140 (28) | 3355 (2124) | 1667 - 3333 | 878 (540) |
| B-5 | 0.032 (0.003) | 0.37 (0.08) | 0.86 (0.20) | 2550 (1184) | 2593 (799) | 96 (22) | 2965 (1538) | 2187 - 4375 | 1014 (504) |
| B-6 | 0.020 (0.003) | 0.12 (0.04) | 1.64 (0.60) | 6292 (2950) | 6098 (2332) | 74 (14) | 3840 (2280) | 3500 - 7000 | 2891 (1622) |
| C | 0.016 (0.005) | 0.015 (0.002) | 10.66 (3.61) | 4340 (2995) | 4000 (1436) | 6 (2) | 407 (319) | - | 25089 (17310) |

**Claims**

1. A method of treating soil including the step of providing a caesium selective sorption capacity, the method including the steps of:

   1) contacting the soil with an at least partly potassium, ammonium, rubidium or caesium exchanged 2-1 layer phyllosilicate or 2-1 layer interstratified phyllosilicate;
   2) subjecting the soil to wetting and drying cycles.

2. The method according to claim 1, further comprising the initial step of adding a 2-1 layer phyllosilicate or 2-1 layer interstratified phyllosilicate and a potassium, an ammonium, a rubidium or a caesium salt to the soil.

3. The method according to claim 2, wherein the potassium, ammonium, rubidium or the caesium salt is present in an amount to at least partly saturate the 2-1 layer phyllosilicate or 2-1 layer interstratified phyllosilicate.

4. The method according to any previous claim, further comprising the step of at least partial saturation of the 2-1 layer phyllosilicate with potassium, ammonium, rubidium, caesium ions in an aqueous solution.

5. The method according to claim 3 or 4, wherein the degree of potassium, ammonium, rubidium, and/or caesium saturation is at least 25%, more preferably greater than 50%, and most preferably greater than 70%.

6. The method according to any previous claim, wherein the cycling step comprises at least 10 wetting and drying cycles, more preferably greater than 20 and most preferably greater than 40 cycles.

7. The method according to any previous claim, wherein the 2-1 layer phyllosilicate is added to the soil at a rate of at least 0.25% by weight of the soil layer to which it is applied.

8. A soil additive, a herbicide, a pesticide, a pH stabiliser, a fertiliser, a fungicide or a treatment additive comprising potassium, ammonium, rubidium or caesium in ionic form and a 2-1 layer phyllosilicate or 2-1 layer interstratified phyllosilicate.

9. The soil additive, herbicide, pesticide, pH stabiliser, fertiliser, fungicide or treatment additive according to claim 8, wherein the composition comprises an at least partly saturated homoionic potassium, ammonium, rubidium, or caesium 2-1 layer phyllosilicate or 2-1 layer interstratified phyllosilicate.

10. The soil additive, herbicide, pesticide, pH stabiliser, fertiliser, fungicide or treatment additive according to claim 8, wherein the composition is a mixture of a potassium, ammonium, rubidium or caesium salt with a 2-1 layer phyllosilicate or 2-1 layer interstratified phyllosilicate.

11. A method of treating soil including the step of providing a caesium selective sorption, the method including the steps of:

    1) adding a 2-1 layer phyllosilicate or 2-1 layer interstratified phyllosilicate to the soil; and
    2) at least partially collapsing the structure of the 2-1 layer phyllosilicate or 2-1 layer interstratified phyllosilicate, the caesium selective sorption of the treated soil having a measured RIP value of at least 3000, preferably at least 5000 and most preferably above 6000 $cmol_c$ per kg weight of the phyllosilicate added.

12. A method according to claim 11, wherein at least a portion of the collapsing step is done in the soil.

13. The method according to claim 11 or 12, wherein the collapsing step includes a plurality of cycles of drying and wetting with water, preferably at least 10 cycles, more preferably greater than 20 and most preferably greater than 40 cycles.

14. The method according to any of the claims 11 to 13, further comprising the step of at least partial saturation of the phyllosilicate with monovalent ions in an aqueous solution before addition to the soil.

15. The method according to claim 14, wherein the monovalent ions are potassium and/or ammonium ions.

16. The method according to any of the claims 11 to 15, wherein the 2-1 layer phyllosilicate is added to the soil at a rate of at least 0.25% by weight of the soil layer to which it is applied.

17. A soil additive, a herbicide, a pesticide, a pH stabiliser, a fertiliser, a fungicide or a treatment additive comprising a 2-1 layer K-, $NH_4$-or a $NH_4$/K-phyllosilicate or 2-1 layer interstratified K-, $NH_4$-or a $NH_4$/K-phyllosilicate with a collapsible structure.

18. The soil additive, herbicide, pesticide, pH stabiliser, fertiliser, fungicide or treatment additive according to claim 17, wherein the phyllosilicate is an at least partly homoionic phyllosilicate.

19. The soil additive, herbicide, pesticide, pH stabiliser, fertiliser, fungicide or treatment additive according to claim 17, wherein the homoionic phyllosilicate is a K-, $NH_4$-or a $NH_4$/K-phyllosilicate.

20. A soil including an additive according to any of claims 8 to 10, or 17 to 19.

21. The soil according to claim 20 having a measured RIP value of at least 3000, preferably at least 5000 and most preferably above 6000 $cmol_c$ per kg weight of the phyllosilicate added.

22. A method according to any of the claims 1 to 7, or 11 to 16, a soil according to claim 20 or 21, or a soil additive, a herbicide, a pesticide, a pH stabiliser, a fertiliser, a fungicide or a treatment additive according to claims 8 to 10, or 17 to 19, wherein the 2-1 layer phyllosilicate includes a smectite clay.

Fig. 1

Fig. 2

EP 1 010 475 A1

Fig. 3

EP 1 010 475 A1

**European Patent Office** | **EUROPEAN SEARCH REPORT** | Application Number
EP 98 20 4250

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | GB 2 302 685 A (ENVIROTREAT LTD) 29 January 1997 (1997-01-29) * page 1, line 5 - line 10 * * page 3, line 21 - line 30 * * page 1, line 18 - line 32 * * page 8, line 1 - page 9, line 24 * --- | 1,2,4,8,17,22 | B09C1/00 B09C1/08 G21F9/30 C09K17/02 |
| Y | EP 0 626 346 A (PELT & HOOYKAAS) 30 November 1994 (1994-11-30) * column 1, line 1 - line 27 * * column 3, line 20 - line 42 * --- | 1,2,4,8,22 | |
| T | DATABASE INSPEC [Online] INSTITUTE OF ELECTRICAL ENGINEERS, STEVENAGE, GB Inspec No. 2227131, OSCARSON D W ET AL: "Evaluation of phyllosilicates as a buffer component in the disposal of nuclear fuel waste" XP002103500 * abstract * & DEC. 1983, CANADA, AECL-7812 --- -/-- | 1,22 | |

| | TECHNICAL FIELDS SEARCHED (Int.Cl.6) |
|---|---|
| | B09C G21F C09K |

The present search report has been drawn up for all claims

| Place of search | Date of completion of the search | Examiner |
|---|---|---|
| THE HAGUE | 21 May 1999 | BOULON A.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

# EUROPEAN SEARCH REPORT

Application Number

EP 98 20 4250

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DATABASE INIS [Online]<br>INTERNATIONAL ATOMIC ENERGY AGENCY (IAEA), VIENNA, AT<br>Inis No. 28(7):23258,<br>XP002103501<br>* abstract *<br>& C.H JEONG: "Affinity of radioactive Cesium and strontium for illite and smectite clays"<br>JOURNL OF ENVIRONMENTAL SCIENCE AND HEALTH,PART A, ENVIRONMENTAL SCIENCE AND ENGINEERING,<br>vol. 31, no. 9, October 1999 (1999-10), pages 2173-2192,<br>US<br>--- | 1-7, 11-16,22 | |
| Y | DATABASE INIS [Online]<br>INTERNATIONAL ATOMIC ENERGY AGENCY (IAEA), VIENNA, AT<br>accession number 27(5):13699,<br>XP002103502<br>* abstract *<br>& D.JONES: "The effects of ameliorative treatments applied to unimproved upland vegetation in the UK contaminated by radiocaesium"<br>ESNA -XXIV ANNUAL MEETING,<br>12 - 16 September 1994, pages 63-64,<br>Sofia, bulgaria<br>--- | 1-8, 11-17,22 | TECHNICAL FIELDS SEARCHED (Int.Cl.6) |

-/--

The present search report has been drawn up for all claims

| Place of search | Date of completion of the search | Examiner |
|---|---|---|
| THE HAGUE | 21 May 1999 | BOULON A.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent Office

**EUROPEAN SEARCH REPORT**

Application Number

EP 98 20 4250

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| Y | DATABASE INSPEC [Online] INSTITUTE OF ELECTRICAL ENGINEERS, STEVENAGE, GB Inspec No. 6224912, EBINA T ET AL: "A comparative study of DFT and XPS with reference to the adsorption of caesium ions in smectites" XP002103503 * abstract * & IUMRS-ICA-97 CONFERENCE - SYMPOSIUM N: COMPUTER AIDED MATERIALS DESIGN AND SIMULATION AND CAMSE-97 IN MATERIALS, MAKUHARI, JAPAN, 16-18 SEPT. 1997, vol. 14, no. 1-4, pages 254-260, ISSN 0927-0256, Computational Materials Science, Feb. 1999, Elsevier, Netherlands --- | 1-7, 11-16,22 | |
| Y | DATABASE INIS [Online] INTERNATIONAL ATOMIC ENERGY AGENCY (IAEA), VIENNA, AT Inis No 30(4):3184, XP002103504 * abstract * & J.BORS: "sorption of iodide and strontium on organophilic bentonite" RADIOCHIMICA ACTA, vol. 82, 1998, pages 269-274, germany ----- | 1-8, 11-17,22 | TECHNICAL FIELDS SEARCHED (Int.Cl.6) |

The present search report has been drawn up for all claims

| Place of search | Date of completion of the search | Examiner |
|---|---|---|
| THE HAGUE | 21 May 1999 | BOULON A.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

European Patent
Office

Application Number

EP 98 20 4250

---

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-7,11-16,22

**European Patent Office**

**LACK OF UNITY OF INVENTION
SHEET B**

Application Number

EP 98 20 4250

The Search Division considers that the present European patent application does not comply with the requirements of unity of invention and relates to several inventions or groups of inventions, namely:

1. Claims: 1-7,11-16,22

   Method of treatment of soil contaminated by Cesium , with a phyllosilicate ( known as such)

2. Claims: 8-10,17-22

   Products containing a known phyllosilicate

## ANNEX TO THE EUROPEAN SEARCH REPORT
## ON EUROPEAN PATENT APPLICATION NO.

EP 98 20 4250

This annex lists the patent family members relating to the patent documents cited in the above-mentioned European search report.
The members are as contained in the European Patent Office EDP file on
The European Patent Office is in no way liable for these particulars which are merely given for the purpose of information.

21-05-1999

| Patent document cited in search report | Publication date | Patent family member(s) | Publication date |
|---|---|---|---|
| GB 2302685 A | 29-01-1997 | US 5827362 A<br>AU 5625896 A<br>GB 2301134 A,B<br>GB 2301133 A,B | 27-10-1998<br>09-01-1997<br>27-11-1998<br>27-11-1996 |
| EP 626346 A | 30-11-1994 | NL 9300910 A<br>NL 9301919 A<br>CA 2124539 A<br>CZ 9401306 A<br>HU 73586 A<br>PL 303628 A<br>SK 63494 A<br>US 5457272 A | 16-12-1994<br>16-12-1994<br>28-11-1994<br>15-02-1995<br>28-08-1994<br>09-01-1995<br>07-12-1994<br>10-10-1995 |

EPO FORM P0459

For more details about this annex : see Official Journal of the European Patent Office, No. 12/82